# FASCICULE DE BREVET EUROPEEN

(11) **EP 1 400 088 B1**
(45) Date de publication et mention de la délivrance du brevet: **25.06.2008**
(21) Numéro de dépôt: 02740847.5
(22) Date de dépôt: 31.05.2002
(51) Int. Cl.: H04L 29/06

(54) **PROCEDE ET SYSTEME DE DIFFUSION DE PROGRAMMES AUDIOVISUELS A PARTIR D'UN SERVEUR**
VERFAHREN UND SYSTEM ZUR ÜBERTRAGUNG VON AUDIOVISUELLEN RUNDFUNKPROGRAMMEN VON EINEM SERVER
METHOD AND SYSTEM FOR AUDIO-VISUAL MATERIALS BROADCASTING FROM A SERVER

(30) Priorité: 06.06.2001 FR 0107396
(43) Date de publication de la demande: 24.03.2004
(60) Demande divisionnaire: 08156309.0
(73) Titulaire: FRANCE TELECOM, 75015 Paris (FR)
(72) Inventeur: BERTIN, Christian, F-35000 Rennes (FR)
(74) Mandataire: Hassine, Albert
(86) Numéro de dépôt international: PCT/FR2002/001835
(87) Numéro de publication internationale: WO 2002/100018

(56) Documents cités:
- WO-A-98/51041
- HANDLEY M ET AL: "SDP: Session Description Protocol" avril 1998 (1998-04) XP002101463 page 2, alinéa 3. -page 3, alinéa 4.2. page 5, alinéa 5.2.

## Description

L'invention concerne un procédé et un système de diffusion de programmes audiovisuels à partir d'un serveur, par réseau INTERNET.

En raison de l'accroissement et de l'intérêt grandissant des utilisateurs grand public pour les échanges de données numériques supports de programmes ou de fichiers audiovisuels sur le réseau INTERNET, de nombreux services, visant à assurer la diffusion de telles sources audiovisuelles, ont jusqu'à ce jour été proposés.

Parmi ceux-ci, on peut citer les services principaux ci-après :

### Service WEB TV (Television sur le Web)

Un tel service permet, par consultation d'un site WEB, de récupérer une adresse URL (adresse de Localiseur Uniforme de Ressources) pour demander un contenu audiovisuel directement. Ce contenu n'est pas diffusé mais dupliqué et émis par la source, autant de fois qu'il y a d'utilisateurs connectés.

La consultation d'un programme télévisé émis dans ce mode implique que l'utilisateur se connecte à chaque fois au site WEB précité, pour demander un contenu en cours de diffusion.

Les informations sur le contenu du programme et la description du mode de diffusion est implicite ou fournie par le site WEB à la demande.

### Service Multicast sur le MBone

En référence à la figure la, dans le cadre de ce service, on utilise (1) la structure de données SDP disponible pour chaque source audiovisuelle pour trouver (2) toutes les informations nécessaires pour se mettre en réception par la protocole IGMP, RFC 2236 : Internet Group Management Protocol, d'une source audiovisuelle AV avec les protocoles et les décodeurs appropriés.

Un exemple de structure de données SDP est donné ci-après :
v=0
o=mhandley 2890844526 2892842807 IN 1P4 126.16.64.4 s=SDP Seminar
i=A Seminar on the session description protocol
u=http://www.cs.ucl.ac.uk/staff/M.Handlry/sdp.03.ps
e=mjh@isi.edu(Mark Handley)
c=IN 1P4 224.217.12/127
t=2873397496 2873404696
a=recvonly
m=audio 49170 RTP/AVP O
m=video 51372 RTP/AVP 31
m=application 32416 udp wb
a=orient:portrait

### Service DVB SI (Digital Video Broadcasting. Service Information)

La diffusion numérique de télédiffusion en Europe, soit par satellite, soit par câble ou encore par voie hertzienne, est basée sur les spécifications élaborées par le forum DVB (Digital Video Broadcasting). La spécification DVB/SI définit la façon de diffuser, dans un multiplex de télévision, les informations nécessaires à l'acquisition de chacun des programmes diffusés dans ce multiplex. Ce mode implique que le terminal de réception soit capable de recevoir tout le multiplex, par exemple 40 Mbits/s pour satellite, pour pouvoir extraire le ou les programmes choisis par l'utilisateur.

### Service IP SAT (Internet par Satellite)

Dans le cas de ce service, il s'agit d'utiliser un moyen de diffusion, le satellite, pour transmettre à haut débit des données destinées à un ou plusieurs utilisateurs destinataires, le plus souvent à la demande des utilisateurs. La diffusion est alors activée par les demandeurs.

### Service IETF

L'IETF (Internet Engineering Task Force) a défini une structure de données qui permet de véhiculer des informations sur les contenus et toutes les informations utiles aux terminaux pour les acquérir, soit par téléchargement, soit en se mettant en réception d'un canal de diffusion (RFC 2327 SDP : *Session Description protocol).*

Les services précités consistent, essentiellement, à mettre dans la structure SDP récupérée, soit à partir d'un site WEB, soit à partir d'un message électronique, toutes les informations nécessaires afin de pouvoir se mettre en réception de la source audiovisuelle. Un tel mode opératoire suppose que les informations précitées ne changent pas en cours d'émission.

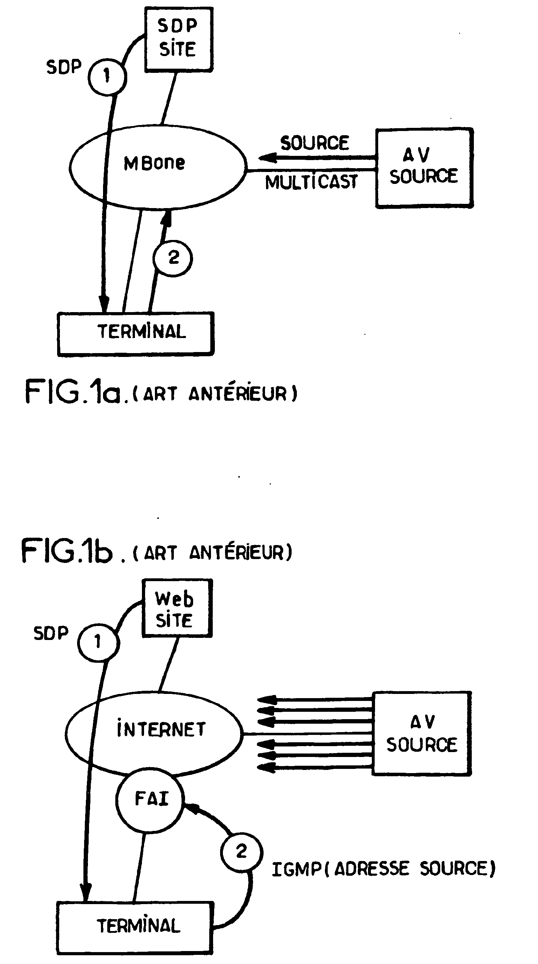

Sur la figure 1b, on a représenté une source audiovisuelle AV connectée au réseau INTERNET et qui diffuse en multicast un programme télévisé sur plusieurs flux.

Plusieurs techniques peuvent être utilisées afin de desservir une population de terminaux dispersée avec des modes de raccordement de ces terminaux très diversifiés, tels que par exemple réseau téléphonique avec modems à différents débits, ADSL (Asymetric Digital Subscriber Line), câble, satellite, RNIS (Réseau Numérique à Interrogation de Services), ou autres.

Soit le programme télévisé est diffusé à des débits différents à 20, 40 ou 60 kbits/s par exemple, soit le signal est décomposé en plusieurs flux, un flux de base à 20 kbits/s et un ou des flux complémentaires à 10 ou 20 kbits/s qui permettent d'améliorer la qualité du signal véhiculé par le flux de base pour une diffusion à des terminaux reliés au réseau téléphonique commuté. La source audiovisuelle AV émet toujours vers le réseau INTERNET, qu'il existe ou non un terminal preneur de cette émission. On peut conclure qu'au début de l'émission, tous les flux émis par la source audiovisuelle s'arrêtent dans le premier équipement du réseau, faute d'une demande d'un terminal par exemple.

Lorsqu'un terminal est configuré pour recevoir le programme télévisé, il utilise les informations contenues dans la structure de données SDP (Session Description Protocol) pour obtenir l'adresse de la source audiovisuelle, son mode de diffusion et de codage. Il peut alors procéder au choix du ou des flux numériques qu'il est capable de recevoir et émettre une demande de réception de la source audiovisuelle par le protocole IGMP en fournissant l'adresse de diffusion du canal choisi. L'opération est répétée autant de fois que le terminal a choisi ce flux.
Un chemin est alors construit par commutation entre le terminal récepteur et le routeur FAI (Fournisseur d'Accès Internet) le plus proche et qui reçoit déjà le flux numérique support du programme télédiffusé demandé en provenance de la source audiovisuelle.

La solution de l'art antérieur précitée fait référence au service IETF décrit dans la recommandation précitée en page 4. Elle présente l'inconvénient de l'absence de synchronisation entre le moment où le terminal récupère la structure de données SDP et le moment où le terminal se met en réception de la source audiovisuelle. Ainsi, pour un programme télévisé régulièrement diffusé sur INTERNET, l'utilisateur se connecte une fois au site WEB de la chaîne assurant la diffusion de ce programme télévisé pour récupérer la structure SDP, et, ensuite, met son terminal en réception de cette source audiovisuelle, chaque fois qu'il le désire, sans se reconnecter au site WEB précité.

Tout changement des conditions de réception du terminal, tel que abonnement, réseau d'accès ou autre, rend caduques les informations contenues dans la structure SDP.

Tout changement du mode de diffusion de la source audiovisuelle, tel que le changement de format, titre d'émission, indication de fin d'émission, mode d'embrouillage ou autre, rend caduques les informations disponibles dans la structure SDP provenant d'un site WEB.

La présente invention a pour objet de remédier aux inconvénients des techniques et solutions de l'art antérieur précitées et prévoit, afin d'autoriser une adaptation à tout changement précédemment mentionné, d'utiliser un canal de diffusion de signalisation, associé au canal de diffusion de la source audiovisuelle, à bas débit et dont les caractéristiques sont invariables dans le temps. Ces caractéristiques peuvent par conséquent être incluses dans la structure SDP.

Un autre objet de la présente invention est également la mise en oeuvre d'un procédé et d'un système de diffusion de programmes audiovisuels permettant de conférer aux sources audiovisuelles une grande souplesse pour changer de mode de diffusion à tout moment, en particulier lors d'un changement de format d'image, de type de codage, de débit ou autre, en l'absence de toute perturbation des terminaux récepteurs et d'intervention des utilisateurs.

Un autre objet de la présente invention est également la mise en oeuvre d'un canal de signalisation permettant de disposer d'informations sur le programme télévisé en cours de diffusion sur INTERNET ou diffusé ultérieurement, sans qu'il soit nécessaire de procéder de temps en temps à un accès au site WEB de la chaîne assurant cette diffusion.

Un autre objet de la présente invention est également la mise en oeuvre d'un canal de signalisation permettant de véhiculer des informations de chiffrement synchronisées avec les changements d'émissions provenant de la source audiovisuelle.

Un autre objet de la présente invention est enfin la mise en oeuvre d'un canal de signalisation susceptible d'être reçu par tous les terminaux récepteurs, ce canal de signalisation étant, pour cette raison, totalement séparé du ou des flux des contenus des programmes diffusés, lesquels peuvent atteindre des débits élevés et qui, par conséquent, ne peuvent donc pas être reçus par tous les terminaux.

Le procédé de diffusion de programmes audiovisuels à partir d'un serveur audiovisuel, comprenant une source de signalisation et une source audiovisuelle, vers un terminal par l'intermédiaire d'un réseau de type IP (Internet Protocol), objet de la présente invention, est remarquable en ce qu'il consiste, à partir de ce terminal, à acquérir un fichier descriptif de cette source de signalisation, et suite à l'acquisition de ce fichier, à acquérir auprès de cette source de signalisation, à partir de ce fichier, un canal de signalisation diffusé, et, à partir de ce canal de signalisation diffusé, à recevoir, sur ce terminal, au moins un flux de données numériques support de ce programme audiovisuel.

Le système de diffusion de programmes audiovisuels à partir d'un serveur audiovisuel vers un ensemble de terminaux interconnectés par l'intermédiaire du réseau INTERNET, objet de la présente invention, est remarquable en ce que ce serveur comprend une source de signalisation permettant la réception, à partir de ces terminaux d'un flux de signalisation diffusé en multicast et une source audiovisuelle permettant la réception, à partir de ces terminaux, de flux de données numériques support du programme audiovisuel diffusé en multicast.

Le procédé et le système objets de l'invention trouvent application à la diffusion de programmes audiovisuels sur INTERNET, ou sur réseau de type IP, quel que soit le mode d'accès à ces programmes audiovisuels à la demande, à accès pré-payé, par abonnement ou autre.

Ils seront mieux compris à la lecture de la description et à l'observation des dessins ci-après dans lesquels, outre la figure la et la figure 1b relatives à l'art antérieur :
- la figure 2a représente un organigramme illustratif du procédé objet de la présente invention ;
- la figure 2b représente, à titre illustratif, une première variante de mise en oeuvre du procédé objet de la présente invention illustré en figure 2a ;
- la figure 2c représente, à titre illustratif, une deuxième variante de mise en oeuvre du procédé objet de la présente invention illustré en figure 2a ;
- la figure 3 représente, à titre illustratif, un schéma fonctionnel d'un système permettant la mise en oeuvre du procédé objet de l'invention.

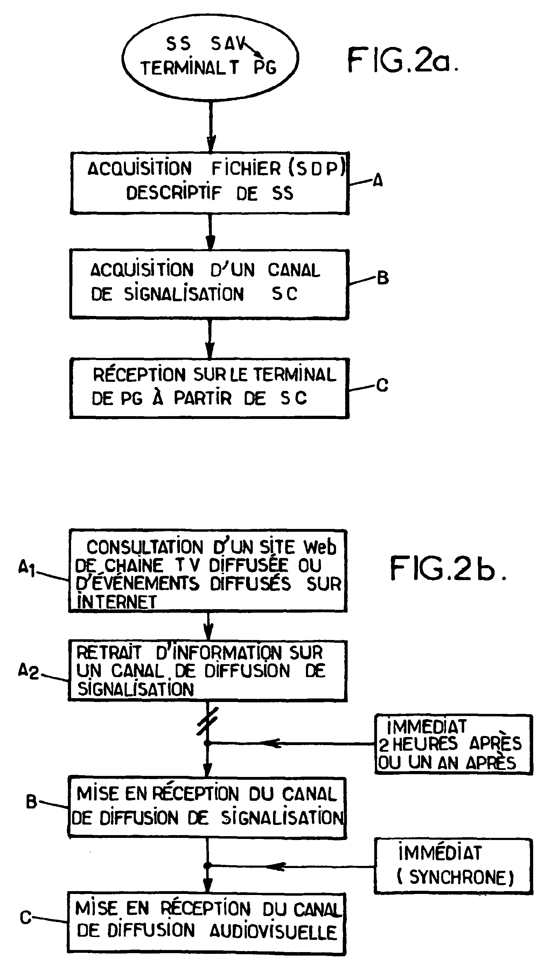

Une description plus détaillée du procédé de diffusion de programmes audiovisuels à partir d'un serveur audiovisuel conforme à l'objet de la présente invention sera maintenant donnée en liaison avec les figures 2a à 2c.

En référence à la figure 2a on indique que le procédé objet de la présente invention est mis en oeuvre à partir d'une source de signalisation SS et d'une source audiovisuelle SAV permettant de diffuser des programmes PG vers un terminal T par l'intermédiaire d'un réseau de type IP par exemple.

On comprend que le serveur audiovisuel comprend la source de signalisation SS et la source audiovisuelle SAV précitée.

En référence à la figure 2a, le procédé objet de la présente invention consiste à partir du terminal T en une étape A à acquérir un fichier descriptif de la source de signalisation SS.

Suite à l'acquisition du fichier précité, au niveau du terminal T, l'étape A est suivie d'une étape B consistant à acquérir auprès de la source de signalisation SS à partir du fichier acquis un canal de signalisation diffusé. Par acquisition d'un canal de signalisation diffusé on indique que le terminal T est en mesure d'acquérir les paramètres d'appel et de réception du canal de signalisation diffusé précité.

L'étape B peut alors être suivie d'une étape C consistant à recevoir sur le terminal T au moins un flux de données numériques support du programme audiovisuel PG. Bien entendu, la réception sur le terminal du flux de données numériques support du programme audiovisuel PG est effectuée par l'intermédiaire du canal de signalisation SC.

D'une manière générale, on indique que le procédé objet de l'invention permet d'offrir une grande souplesse d'utilisation aux sources audiovisuelles pour changer de mode de diffusion à tout moment lorsque que cela est nécessaire et en particulier lors d'un changement de forme à l'image, de type de codage, du débit ou autre paramètre de transmission, sans toutefois perturber les récepteurs et sans intervention des utilisateurs.

Le fichier descriptif de la source de signalisation SS peut, par exemple, être constitué par un fichier SDP.

Le canal de signalisation diffusé SC permet de disposer d'informations sur l'émission en cours de diffusion, c'est-à-dire sur le programme diffusé PG, programme diffusé sur le réseau IP c'est-à-dire sur le réseau INTERNET ou, dans le cas d'une diffusion future, sans avoir à se reconnecter de temps en temps au site WEB de la chaîne assurant la diffusion du programme PG.

Le canal de signalisation diffusé SC permet de véhiculer des informations de chiffrement synchronisées avec les changements d'émission provenant de la source audiovisuelle SAV.

En ce qui concerne le canal de signalisation SC on indique que ce canal de signalisation est un canal que tous les récepteurs sont en mesure de recevoir. Pour cette raison ce canal de signalisation diffusé SC est séparé du ou des flux de contenu diffusé, lesquels doivent nécessairement atteindre des débits élevés et qui, par conséquent, ne peuvent être reçus par tous les terminaux, en raison des capacités spécifiques parfois limitées de ces derniers.

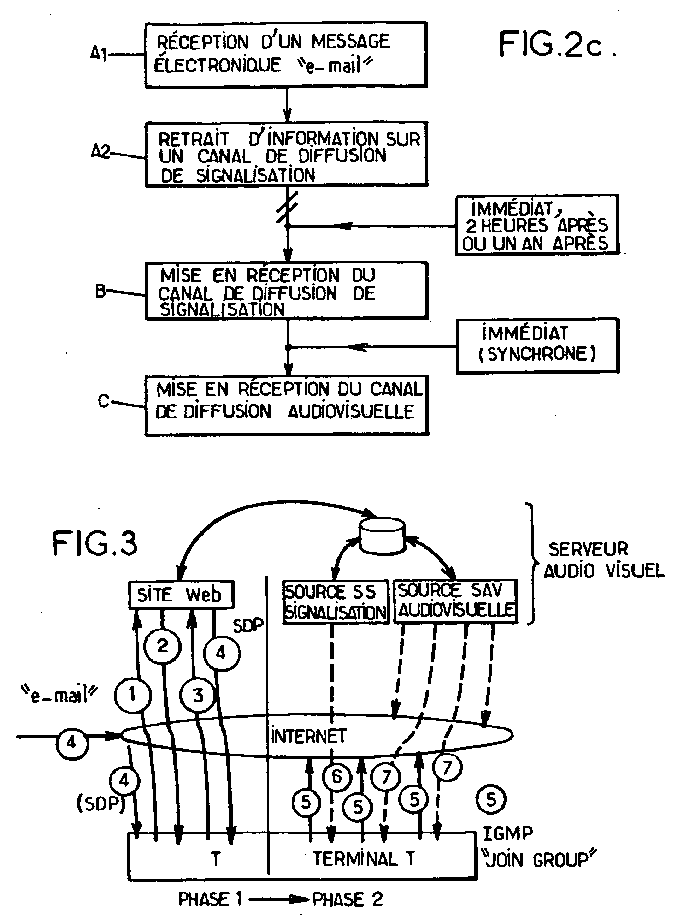

Différentes variantes de mise en oeuvre du procédé objet de la présente invention seront maintenant décrites en liaison avec les figures 2b et 2c.

D'une manière générale, en référence à la figure 2b, on indique que l'étape A consistant à acquérir un fichier descriptif de la source de signalisation SS peut consister en, et comprend, une première étape A1 de lancement d'une requête de transmission d'un fichier correspondant. Cette étape A1 étant suivie d'une étape A2 consistant en une étape de réception du fichier précité.

L'étape A1 peut consister, par exemple, en une opération de consultation d'un site WEB de chaîne de diffusion, à partir de chaînes télévisées diffusées ou d'évènements diffusés sur le réseau INTERNET.

L'étape A2 peut consister en une étape de retrait d'informations sur un canal de diffusion de signalisation sous forme d'un fichier SDP.

En ce qui concerne la mise en oeuvre des étapes B et C, en référence à la figure 2b, on indique que les étapes B et C précitées consistant à acquérir le canal de signalisation diffusé SC et à recevoir sur le terminal T au moins un flux de données numériques support du programme audiovisuel sont différées. La mise en oeuvre des étapes B et C étant bien entendu soumise à la seule initiative de l'utilisateur.

Ainsi, en référence à la figure 2b on indique que la mise en oeuvre des étapes B et C peut être différée de plusieurs heures, voire plusieurs mois ou même une année ou plus, après exécution de l'étape A d'acquisition du fichier SDP descriptif de la source de signalisation SS.

Dans ces conditions, le fichier SDP descriptif de la source de signalisation est archivé au niveau du terminal T en vue de l'accès différé par la source de signalisation SS et à la source audiovisuelle dans le but d'exécuter les étapes B et C ultérieurement.

Selon un mode de mise en oeuvre remarquable du procédé objet de la présente invention, l'étape B consistant à acquérir auprès de la source de signalisation SS du canal de signalisation SC peut consister à partir du terminal T :
- à lancer une requête de réception d'un flux "MULTICAST" auprès du réseau sur lequel est interconnecté le terminal T puis
- à recevoir le canal de signalisation diffusé en "MULTICAST" par exemple.

Enfin, la succession des étapes B et C est elle non différée. L'exécution des étapes B et C précitées étant successive et immédiate.

La figure 2c représente une variante de mise en oeuvre du procédé objet de la présente invention dans laquelle l'étape A est réalisée de manière plus souple.

En particulier, alors que, de même que dans le cas de la figure 2b, l'étape A d'acquisition d'un fichier descriptif de la source de signalisation SS est réalisée en deux étapes A1 et A2, l'étape A1 peut consister avantageusement en la simple réception d'un message électronique désigné par e-mail, ce message électronique comportant un fichier attaché à ce dernier en pièce jointe. Ce fichier constitue le fichier tel qu'un fichier SDP par exemple, lequel est alors mémorisé dans le terminal T.

On comprend, dans ces conditions, que le retrait de l'information sur un canal de diffusion de signalisation est réalisé de la manière la plus simple, puisque cette opération consiste en la mémorisation du fichier SDP précité.

Bien entendu le fichier SDP dans tous les cas de mise en oeuvre soit selon la figure 2b, soit selon la figure 2c de l'étape d'acquisition du fichier SDP descriptif de la source de signalisation SS, comporte un protocole de mise en réception de la source de signalisation SS support des informations de mise en réception de la source audiovisuelle SAV.

Enfin l'étape C consistant à recevoir sur le terminal T au moins un flux de données numériques support du programme audiovisuel PG peut comporter une étape de lancement d'une requête de flux de données numériques support de ce programme audiovisuel et une étape de réception proprement dite du flux de données numériques support du programme audiovisuel PG précité.

En outre, et conformément au processus de diffusion "MULTICAST", on indique que les étapes de lancement d'une requête respectivement de réception du flux de données numériques support du programme audiovisuel PG peuvent être répétées pour l'obtention d'un signal audiovisuel complet ou de meilleure qualité.

Une description plus détaillée d'un système de diffusion de programme audiovisuel à partir d'un serveur audiovisuel vers un ensemble de terminaux et en particulier d'un terminal T interconnecté par l'intermédiaire du réseau INTERNET conforme à l'objet de la présente invention et permettant la mise en oeuvre du procédé objet de l'invention précédemment décrit sera maintenant donnée en liaison avec la figure 3.

Sur la figure 3 on a représenté le terminal T interconnecté par le réseau INTERNET, d'une part à un site WEB de serveur audiovisuel tel qu'un site de chaîne de télédiffusion de programmes sur le réseau INTERNET, Le terminal T étant d'autre part, interconnecté bien entendu par l'intermédiaire du réseau INTERNET au même serveur audiovisuel, c'est-à-dire à la source de signalisation SS et à la source audiovisuelle SAV.

En outre, et de manière non limitative on indique que le terminal T est bien entendu adapté et susceptible de recevoir des messages de courrier électronique comme tout terminal normalement disponible dans le commerce.

Sur la figure 3, les lignes dessinées en pointillés à destination du terminal T représentent des flux diffusés sur le réseau INTERNET en diffusion dite "MULTICAST". En particulier seules les lignes en pointillés dont la pointe de flèche arrive dans le terminal correspondent à des flux reçus par le terminal T, les autres représentant des flux de données numériques qui n'arrivent pas au terminal de manière connue en tant que telle dans la diffusion MULTICAST.

En particulier, les flux diffusés en mode MULTICAST n'arrivent au terminal T que si le terminal en a fait la demande par une commande IGMP.

La description du système objet de la présente invention sera maintenant donnée en liaison avec la figure 3 dans le cas où le protocole objet de la présente invention mis en oeuvre correspond sensiblement au mode de mise en oeuvre de la figure 2a ou de la figure 2b.

Sur la figure 3 précitée on indique que :
- la flèche 1 représente une requête ou demande de page HTML envoyée par le terminal 1 au site WEB du serveur audiovisuel ;
- la flèche 2 représente la réception de la page HTML requise par le terminal 1 ;
- la flèche 3 représente une requête ou demande de fichier SDP envoyée du terminal T au site WEB précité ; et
- la flèche 4 représente la réception du fichier SDP par le terminal 1 à partir du site WEB précité.

Enfin de manière non limitative, les opérations précédentes représentant l'étape A et en particulier les étapes A1 et A2 de la figure 2b de mise en oeuvre du procédé objet de la présente invention, on indique également que la flèche 4 représentée sur la figure 3 et désignée e-mail représente la mise en oeuvre de l'étape A1 et de l'étape A2 de la figure 2b lors de la réception d'un fichier joint constitutif du fichier SDP.

Pour cette raison et par analogie avec le cas de la figure 2b les flèches e-mail et SDP référencées sur la figure 3 portent toutes les deux la référence 4, puisque ces opérations permettent l'acquisition d'un fichier SDP.

En référence à la figure 3, on rappelle que les opérations B et C d'acquisition d'un canal de signalisation SC puis d'acquisition sur le terminal T d'un programme diffusé PG à partir du canal de signalisation SC peuvent être mises en oeuvre soit de manière non différée suite à l'acquisition du fichier SDP, soit au contraire de manière différée.

Dans les deux cas et en référence à la figure 3 les flèches successives représentent :
- la flèche 5 une demande de réception de flux MULTICAST envoyée par le terminal 1 vers la source de signalisation SS
- la flèche 6 la réception du canal de signalisation SC diffusée par exemple en MULTICAST et pour cette raison représentée par une ligne pointillée dont la pointe de flèche atteint le terminal T ;
- la flèche 5 : demande de réception de flux MULTICAST adressée à la source audiovisuelle SAV ;
- la flèche 7 : réception d'un flux de la source audiovisuelle diffusée en MULTICAST, c'est-à-dire des données de programmes audiovisuels PG.

Sur la figure 3, on distingue deux phases de mise en oeuvre du système objet de la présente invention selon le procédé décrit en liaison avec les figures 2a à 2c. Ces deux phases pouvant être très éloignées dans le temps l'une de l'autre ou enchaînées, phase d'acquisition, dite phase 1, de la structure de données SDP et phase de mise en réception dite phase 2, de la source audiovisuelle.

Différentes indications seront maintenant données relativement à l'exécution des phases 1 et phase 2 respectivement :
Phase 1 : acquisition de la structure de données SDP.

Dans la première phase dite phase 1, l'utilisateur se connecte au site WEB précité grâce à l'utilisation d'un navigateur en fournissant l'adresse URL du site. Le site WEB correspondant au site de la chaîne diffusant le programme PG. L'adresse URL est une adresse classique telle que par exemple http://wwww:SOURCE.FR/.
Le terminal T reçoit en retour une page HTML. Cette page peut pointer sur d'autres pages ou permettre de faire des recherches sur des émissions de programmes et des chaînes diffusées.

Lorsque l'utilisateur choisit une émission ou une chaîne de télévision par l'intermédiaire d'une flèche 3 il reçoit en retour une structure de données SDP par la flèche 4, laquelle lui fournit toutes les informations pour se connecter soit immédiatement, soit en différé sur le canal de signalisation diffusé associé à la source qu'il a sélectionnée. Le fichier SDP est alors mémorisé dans la mémoire de masse du terminal T.

De la même façon, ainsi que représenté sur la figure 3, le fichier SDP précité peut également parvenir au terminal T comme fichier joint à un message électronique transmis par un interlocuteur qui recommande à l'utilisateur du terminal de consulter ou de visualiser telle chaîne ou tel programme PG.

Toutefois, dans le cas où la source audiovisuelle fonctionne par exemple sur un mode dit "à paiement à la demande" ou "pay per view" en langage anglo-saxon, l'utilisateur doit par ailleurs acquérir les droits de visualisation de la chaîne ou des programmes PG qu'il requiert.

Phase 2 : mise en réception de la source audiovisuelle diffusée.

La phase 2 commence immédiatement si l'utilisateur a choisi de regarder le programme PG immédiatement et se répète ensuite chaque fois que cet utilisateur souhaite regarder ce programme.

La phase 2 peut au contraire commencer beaucoup plus tard, dans le cas où l'utilisateur a choisi une émission particulière programmée dans les jours qui vont suivre le moment où la récupération du fichier SDP a été effectuée. C'est en particulier le cas d'un magnétoscope programmé pour enregistrer une émission en l'absence de l'utilisateur.

Au moment opportun, c'est-à-dire sur déclenchement du magnétoscope programmé précité, le terminal T analyse la structure de données SDP correspondant à la chaîne ou au programme PG sélectionné pour extraire les informations nécessaires à la réception telles que l'adresse MULTICAST, l'adresse de la source de signalisation SS ou analogue. Ces informations sont les informations utiles afin d'assurer la mise en réception du canal de signalisation diffusé SC correspondant à la source audiovisuelle par l'intermédiaire d'une commande IGMP "join group".

Dans ce cas le canal de signalisation, flèche 6, reçoit toutes les informations de description du mode de diffusion de la source audiovisuelle et le terminal T peut alors se mettre en réception immédiate dans une des configurations utilisées par la source en diffusion compte tenu de la compatibilité nécessaire avec les capacités du récepteur, en termes de débit d'accès de protocole de réception et de décodage. On indique qu'un ou plusieurs flux complémentaires peuvent être émis par la source conformément au mode d'émission MULTICAST.

Dans ce but, le récepteur, par l'intermédiaire du terminal T, se met en réception d'autant de canaux diffusés par la source audiovisuelle SAV par autant de commandes IGMP "join group 5" qu'il y a de flux de programme P0 dans la configuration de réception retenue par le terminal T.

Chaque commande IGMP "join group" déclenche alors la réception d'un des flux de programme P0 de la source 7 dans le terminal T.

En ce qui concerne la diffusion et la réception d'une pluralité de flux de programmes PG conformément au mode d'émission MULTICAST, on indique que ce mode d'émission est connu de l'état de la technique et qu'en conséquence, il ne fera pas l'objet d'une description plus détaillée.

Pour assurer la mise en oeuvre du procédé et du système objets de la présente invention, en référence à la figure 3, on indique que le serveur audiovisuel comprend une source de signalisation SS permettant la réception à partir des terminaux, et en particulier d'un terminal donné T, d'un flux de signalisation diffusé en MULTICAST. Il comporte également une source audiovisuelle SAV permettant la réception à partir des terminaux et du terminal T de flux de données numériques support du programme audiovisuel diffusé en MULTICAST.

Toutefois, et afin d'assurer la mise en oeuvre du procédé et du système objets de la présente invention dans des conditions de fiabilité et de sécurité satisfaisantes, dans la syntaxe définie dans le fichier SDP on introduit une extension pour indiquer que le canal décrit est un canal de signalisation diffusé dans la commande <média> désignée par "m".

Une extension spécifique peut consister en une chaîne de caractères (tv-sig) introduite dans la commande précitée.

Dans ces conditions, la nouvelle commande peut alors prendre la forme ci-après donnée à titre d'exemple non limitatif :
c = IN IP4 224.2.1.1/127
m = Application 32416 UDP tv-sig

La commande précitée avec le champ ou extension "tv-sig" dans la structure SDP permet d'indiquer au terminal T que le canal de signalisation est diffusé avec l'adresse MULTICAST IP4 224.2.1.1 et que son protocole, lequel s'appuie sur le protocole UDP, et sa syntaxe sont définis dans le document de spécification désigné par la chaîne de caractères "tv-sig".

Dans le canal de signalisation SC la source diffuse des informations de même type que celles contenues dans le fichier SDP mais cette fois pour se mettre en réception des contenus audiovisuels diffusés par la source dans les meilleures conditions compatibles avec les possibilités du terminal T en termes de débit d'accès, de protocole et de processus de décodage.

## Revendications

1. Procédé de diffusion de programmes audiovisuels (PG) à partir d'un serveur audiovisuel vers un terminal (T) par l'intermédiaire d'un réseau de type IP, le serveur comprenant une source de signalisation (SS) et une source audiovisuelle (SAV),
**caractérisé en ce qu'**il consiste, auprès dudit terminal (T) :
a) à acquérir (A) un fichier descriptif de ladite source de signalisation (SS), comportant au moins des données d'information relative à un canal de signalisation diffusé (SC);
b) suite à l'acquisition dudit fichier descriptif, à acquérir (B) auprès de ladite source de signalisation (SS) à partir des données dudit fichier descriptif de la source de signalisation (SS), ledit canal de signalisation diffusé (SC); et
c) à partir d'informations fournies par le canal de signalisation diffusé(SC), à recevoir (C) de ladite source audiovisuelle, sur ledit terminal (T), au moins un flux de données numériques support dudit programme audiovisuel (PG), via ledit réseau.

2. Procédé selon la revendication 1, **caractérisé en ce que** ledit fichier descriptif de ladite source de signalisation (SS) est un fichier SDP.

3. Procédé selon la revendication 1 ou 2, **caractérisé en ce que** l'étape consistant à acquérir (A) un fichier descriptif de ladite source de signalisation (SS) comporte :
- une étape (A1) de lancement d'une requête et de réception de page HTML ;
- une étape (A2) de chargement dudit fichier.

4. Procédé selon l'une des revendications 2 ou 3, **caractérisé en ce que** l'étape consistant à acquérir un fichier SDP comprend :
- une étape (A1) de lancement d'une requête de transmission d'un fichier SDP ;
- une étape (A2) de réception d'un fichier SDP.

5. Procédé selon l'une des revendications 1 à 4, **caractérisé en ce que** les étapes b) et C) consistant à acquérir le canal de signalisation diffusé (SC) et à recevoir, sur ledit terminal (T), au moins un flux de données numériques support dudit programme audiovisuel (PG) sont différées, le fichier descriptif de ladite source de signalisation (SS) étant archivé au niveau dudit terminal en vue de l'accès différé à ladite source de signalisation (SS) et à ladite source audiovisuelle (SAV).

6. Procédé selon l'une des revendications 1 à 5, **caractérisé en ce que** ladite étape consistant à acquérir auprès de ladite source de signalisation (SS) ledit canal de signalisation diffusé (SC) consiste, à partir dudit terminal (T) :
- à lancer une requête de réception de flux multicast auprès du réseau ;
- à recevoir ledit canal de signalisation diffusé en multicast.

7. Procédé selon l'une des revendications 1 à 6, **caractérisé en ce que** la succession des étapes b) et c) est non différée.

8. Procédé selon l'une des revendications 1 à 7, **caractérisé en ce que** l'étape a) est exécutée à partir d'une opération telle que la réception (A1) d'un courrier électronique comportant un fichier attaché à ce dernier, lequel est mémorisé dans ledit terminal (T).

9. Procédé selon l'une des revendications 1 à 8, **caractérisé en ce que** ledit fichier comporte un protocole de mise en réception de ladite source de signalisation (SS) support des informations de mise en réception de ladite source audiovisuelle (SAV).

10. Procédé selon l'une des revendications 1 à 9, **caractérisé en ce que** ladite étape (C) consistant à recevoir, sur ledit terminal (T), au moins un flux de données numériques support dudit programme audiovisuel (PG) comporte :
- une étape (5) de lancement d'une requête de flux de données numériques support de ce programme audiovisuel ;
- une étape (7) de réception dudit flux de données numériques support dudit programme audiovisuel.

11. Procédé selon la revendication 10, **caractérisé en ce que** les étapes de lancement d'une requête respectivement de réception dudit flux de données numériques sont répétées pour l'obtention d'un signal audiovisuel complet ou de meilleure qualité.

12. Système de diffusion de programmes audiovisuels (PG) à partir d'un serveur audiovisuel vers un ensemble de terminaux (T) interconnectés par l'intermédiaire du réseau de type IP, **caractérisé en ce que** ledit serveur comprend :
- une source de signalisation (SS) permettant l'émission vers lesdits terminaux (T), d'un flux de signalisation diffusé en multicast ;
- une source audiovisuelle (SAV) permettant l'émission vers lesdits terminaux, de flux de données numériques support du programme audiovisuel (PG) diffusé en multicast,
et **en ce que** les terminaux (T) sont agencés pour recevoir chacun un fichier descriptif de ladite source de signalisation (SS), comportant au moins des données d'information relative à un canal de signalisation diffusé.

13. Serveur audiovisuel destiné à diffuser des programmes audiovisuels (PG) vers au moins un terminal (T) interconnecté à un réseau de type IP, **caractérisé en ce qu'**il comprend :
- une source de signalisation (SS) destinée à émettre vers un terminal (T) un flux de signalisation ;
- une source audiovisuelle (SAV) destinée à émettre vers ce terminal (T) un flux de données numériques support du programme audiovisuel diffusé (PG) ;
- ainsi que des moyens pour former un fichier descriptif de ladite source de signalisation, comportant au moins des données d'information relatives à un canal de signalisation diffusé, ledit fichier étant destiné à être transmis audit terminal pour acquérir ce canal de signalisation.

14. Terminal (T) destiné à recevoir, par l'intermédiaire d'un réseau de type IP, des programmes audiovisuels (PG) à partir d'un serveur audiovisuel comprenant une source de signalisation (SS) et une source audiovisuelle (SAV), ledit terminal (T) comportant au moins ledit fichier descriptif consistant en une structure de données fournissant les informations relatives à un canal de signalisation diffusé:
- des moyens pour lancer une requête de transmission (1) d'un fichier descriptif de la source de signalisation (SS), ledit fichier descriptif consistant en une structure de données fournissant les informations relatives à un canal de signalisation diffusé permettant l'acquisition d'un canal de signalisation diffusé,
- des moyens pour recevoir (4) ledit fichier descriptif de la source de signalisation (SS).
- des moyens pour, à partir du fichier descriptif de la source de signalisation (SS), acquérir (6) auprès de ladite source de signalisation (SS) un canal de signalisation diffusé (SC); et
- des moyens pour, à partir dudit canal de signalisation diffusé (SC), recevoir (7) au moins un flux de données numériques, support dudit programme audiovisuel (PG).

## Claims

1. Method of broadcasting audiovisual programmes (PG) from an audiovisual server to a terminal (T) by way of an IP-type network, the server comprising a signalling source (SS) and an audiovisual source (SAV),
**characterized in that** it consists, at said terminal (T):
a) in acquiring (A) a descriptive file of said signalling source (SS) comprising at least data relating to information pertaining to a broadcast signalling channel (SC);
b) following the acquisition of said descriptive file, in acquiring (B) from said signalling source (SS) on the basis of the data of said descriptive file of the signalling source (SS), said broadcast signalling channel (SC); and
c) on the basis of information provided by the broadcast signalling channel (SC), in receiving (C) from said audiovisual source, on said terminal (T), at least one support stream of digital data for said audiovisual programme (PG) via said network.

2. Method according to Claim 1, **characterized in that** said descriptive file of said signalling source (SS) is an SDP file.

3. Method according to Claim 1 or 2, **characterized in that** the step consisting in acquiring (A) a descriptive file of said signalling source (SS) comprises:
- a step (A1) of issuing a request and of receiving an HTML page;
- a step (A2) of loading said file.

4. Method according to one of Claims 2 or 3, **characterized in that** the step consisting in acquiring an SDP file comprises:
- a step (A1) of issuing a request to transmit an SDP file;
- a step (A2) of receiving an SDP file.

5. Method according to one of Claims 1 to 4, **characterized in that** steps b) and c) consisting in acquiring the broadcast signalling channel (SC) and in receiving, on said terminal (T), at least one support stream of digital data for said audiovisual programme (PG) are deferred, the descriptive file of said signalling source (SS) being archived at the level of said terminal with a view to the deferred access to said signalling source (SS) and to said audiovisual source (SAV).

6. Method according to one of Claims 1 to 5, **characterized in that** said step consisting in acquiring from said signalling source (SS) said broadcast signalling channel (SC) consists, on the basis of said terminal (T):
- in issuing a request to receive a multicast stream at the network;
- in receiving said signalling channel broadcast in multicast mode.

7. Method according to one of Claims 1 to 6, **characterized in that** the succession of steps b) and c) is not deferred.

8. Method according to one of Claims 1 to 7, **characterized in that** step a) is executed on the basis of an operation such as the receipt (A1) of an e-mail comprising a file attached to the latter, which is stored in said terminal (T).

9. Method according to one of Claims 1 to 8, **characterized in that** said file comprises a protocol for placing in receive mode said signalling source (SS) supporting information for placing said audiovisual source (SAV) in receive mode.

10. Method according to one of Claims 1 to 9, **characterized in that** said step (C) consisting in receiving, on said terminal (T) at least one support stream of digital data for said audiovisual programme (PG) comprises:
- a step (5) of issuing a request for a support stream of digital data for this audiovisual programme;
- a step (7) of receiving said support stream of digital data for said audiovisual programme.

11. Method according to Claim 10, **characterized in that** the steps of issuing a request respectively of receiving said stream of digital data are repeated for the obtaining of a complete audiovisual signal or one of better quality.

12. System for broadcasting audiovisual programmes (PG) from an audiovisual server to a set of terminals (T) interconnected by way of the IP-type network, **characterized in that** said server comprises:
- a signalling source (SS) allowing the sending to said terminals (T) of a signalling stream broadcast in multicast mode;
- an audiovisual source (SAV) allowing the sending to said terminals of support streams of digital data for the audiovisual programme (PG) broadcast in multicast mode,
and **in that** the terminals (T) are adapted so as to each receive a descriptive file of said signalling source (SS) comprising at least data relating to information pertaining to a broadcast signalling channel.

13. Audiovisual server intended to broadcast audiovisual programmes (PG) to at least one terminal (T) interconnected to an IP-type network, **characterized in that** it comprises:
- a signalling source (SS) intended to send a signalling stream to a terminal (T);
- an audiovisual source (SAV) intended to send a support stream of digital data for the broadcast audiovisual programme (PG) to this terminal (T);
- and means for forming a descriptive file of said signalling source comprising at least data relating to information pertaining to a broadcast signalling channel, said file being intended to be transmitted to said terminal so as to acquire this signalling channel.

14. Terminal (T) intended to receive, by way of an IP-type network, audiovisual programmes (PG) from an audiovisual server comprising a signalling source (SS) and an audiovisual source (SAV), said terminal (T) comprising at least said descriptive file consisting of a data structure providing the information pertaining to a broadcast signalling channel:
- means for issuing a transmission request (1) for a descriptive file of said signalling source (SS), said descriptive file consisting of a data structure providing the information pertaining to a broadcast signalling channel allowing the acquisition of a broadcast signalling channel;
- means for receiving (4) said descriptive file of the signalling source (SS);
- means for, on the basis of the descriptive file of the signalling source (SS), acquiring (6) from said signalling source (SS) a broadcast signalling channel (SC); and
- means for, on the basis of said broadcast signalling channel (SC), receiving (7) at least one support stream of digital data for said audiovisual programme (PG).

## Patentansprüche

1. Verfahren zum Senden audiovisueller Programme (PG) ausgehend von einem audiovisuellen Server zu einem Terminal (T) über ein Netzwerk des Typs IP, wobei der Server eine Signalisierungsquelle (SS) und eine audiovisuelle Quelle (SAV) umfasst,
**dadurch gekennzeichnet, dass** es an dem Terminal (T) aus Folgendem besteht:
a) Erfassen (A) einer Beschreibungsdatei der Signalisierungsquelle (SS), die mindestens Informationsdaten in Zusammenhang mit einem gesendeten Signalisierungskanal (SC) enthält,
b) nach dem Erfassen der Beschreibungsdatei, Erfassen (B) an der Signalisierungsquelle (SS) ausgehend von den Daten der Beschreibungsdatei der Signalisierungsquelle (SS) des gesendeten Signalisierungskanals (SC), und
c) ausgehend von Informationen, die von dem gesendeten Signalisierungskanal (SC) geliefert werden, Empfangen (C) von der audiovisuellen Quelle auf dem Terminal (T) mindestens eines Stroms digitaler Unterstützungsdaten des audiovisuellen Programms (PG) über das Netzwerk.

2. Verfahren nach Anspruch 1, **dadurch gekennzeichnet, dass** die Beschreibungsdatei der Signalisierungsquelle (SS) eine SDP-Datei ist.

3. Verfahren nach Anspruch 1 oder 2, **dadurch gekennzeichnet, dass** der Schritt des Erfassens (A) einer Beschreibungsdatei der Signalisierungsquelle (SS) Folgendes aufweist:
- einen Schritt (A1) des Startens einer Anfrage und Empfangens einer HTML-Seite,
- einen Schritt (A2) des Ladens der Datei.

4. Verfahren nach einem der Ansprüche 2 oder 3, **dadurch gekennzeichnet, dass** der Schritt des Erfassens einer SDP-Datei Folgendes aufweist:
- einen Schritt (A1) des Startens einer Anfrage um Senden einer SDP-Datei,
- einen Schritt (A2) des Empfangens einer SDP-Datei.

5. Verfahren nach einem der Ansprüche 1 bis 4, **dadurch gekennzeichnet, dass** die Schritte b) und C), die aus dem Erfassen des gesendeten Signalisierungskanals (SC) und Empfangen auf dem Terminal (T) mindestens eines Stroms digitaler Unterstützungsdaten des audiovisuellen Programms (PG) bestehen, verzögert sind, wobei die Beschreibungsdatei der Signalisierungsquelle (SS) am Terminal im Hinblick auf den verzögerten Zugriff auf die Signalisierungsquelle (SS) und auf die audiovisuelle Quelle (SAV) archiviert wird.

6. Verfahren nach einem der Ansprüche 1 bis 5, **dadurch gekennzeichnet, dass** der Schritt des Erfassens des gesendeten Signalisierungskanals (SC) an der Signalisierungsquelle (SS) darin besteht, ausgehend von dem Terminal (T):
- eine Empfangsanfrage um Multicast-Strom bei dem Netzwerk zu starten,
- den in Multicast gesendeten Signalisierungskanal zu empfangen.

7. Verfahren nach einem der Ansprüche 1 bis 6, **dadurch gekennzeichnet, dass** die Abfolge der Schritte b) und c) nicht verzögert ist.

8. Verfahren nach einem der Ansprüche 1 bis 7, **dadurch gekennzeichnet, dass** der Schritt a) ausgehend von einem Vorgang wie zum Beispiel dem Empfang (A1) einer elektronischen Post, die eine angehängte Datei hat, die in dem Terminal (T) gespeichert wird, ausgeführt wird.

9. Verfahren nach einem der Ansprüche 1 bis 8, **dadurch gekennzeichnet, dass** die Datei ein Protokoll zum Einstellen auf Empfang der Signalisierungsquelle (SS) als Unterstützung der Informationen zum Einstellen auf Empfang der audiovisuellen Quelle (SAV) aufweist.

10. Verfahren nach einem der Ansprüche 1 bis 9, **dadurch gekennzeichnet, dass** der Schritt (C), der im Empfang mindestens eines Stroms digitaler Unterstützungsdaten des audiovisuellen Programms (PG) auf dem Terminal (T) besteht, Folgendes aufweist:
- einen Schritt (5) des Startens einer Anfrage um Strom digitaler Unterstützungsdaten dieses audiovisuellen Programms,
- einen Schritt (7) des Empfangens des Stroms digitaler Unterstützungsdaten des audiovisuellen Programms.

11. Verfahren nach Anspruch 10, **dadurch gekennzeichnet, dass** die Schritte des Startens einer Anfrage jeweils für den Empfang des Stroms digitaler Daten zum Erzielen eines kompletten audiovisuellen Signals oder audiovisuellen Signals mit besserer Qualität wiederholt werden.

12. System zum Senden audiovisueller Programme (PG) ausgehend von einem audiovisuellen Server zu einer Einheit Terminals (T), die über ein Netzwerk des Typs IP zusammengeschaltet sind, **dadurch gekennzeichnet, dass** der Server Folgendes aufweist:
- eine Signalisierungsquelle (SS), die das Senden eines in Multicast gesendeten Signalisierungsstroms zu den Terminals (T) erlaubt,
- eine audiovisuelle Quelle (SAV), die das Senden digitaler Unterstützungsdatenströme des audiovisuellen Programms (PG), das in Multicast gesendet wird, zu den Terminals erlaubt,
und dadurch, dass die Terminals (T) eingerichtet sind, um jeweils eine Beschreibungsdatei der Signalisierungsquelle (SS) zu empfangen, die mindestens Informationsdaten zu einem gesendeten Signalisierungskanal (SC) aufweist.

13. Audiovisueller Server, der dazu bestimmt ist, audiovisuelle Programme (PG) zu mindestens einem Terminal (T) zu senden, das mit einem Netzwerk des Typs IP zusammengeschaltet ist, **dadurch gekennzeichnet, dass** er Folgendes aufweist:
- eine Signalisierungsquelle (SS), die dazu bestimmt ist, einen Signalisierungsstrom zu einem Terminal (T) zu senden,
- eine audiovisuelle Quelle (SAV), die dazu bestimmt ist, zu diesem Terminal (T) einen digitalen Unterstützungsdatenstrom des gesendeten audiovisuellen Programms (PG) zu senden,
- sowie Mittel zum Bilden einer Beschreibungsdatei der Signalisierungsquelle, die mindestens Informationsdaten zu einem gesendeten Signalisierungskanal aufweist, wobei die Datei dazu bestimmt ist, zu dem Terminal gesendet zu werden, um diesen Signalisierungskanal zu erfassen.

14. Terminal (T), das dazu bestimmt ist, über ein Netzwerk des Typs IP audiovisuelle Programme (PG) ausgehend von einem audiovisuellen Server zu empfangen, der eine Signalisierungsquelle (SS) und eine audiovisuelle Quelle (SAV) aufweist, wobei das Terminal (T) mindestens die Beschreibungsdatei aufweist, die aus einer Datenstruktur besteht, die Informationen zu einem gesendeten Signalisierungskanal liefert,
- Mittel zum Starten einer Sendeanfrage (1) einer Beschreibungsdatei der Signalisierungsquelle (SS), wobei die Beschreibungsdatei aus einer Datenstruktur besteht, die Informationen zu einem gesendeten Signalisierungskanal liefert, wodurch das Erfassen eines gesendeten Signalisierungskanals erlaubt wird,
- Mittel zum Empfangen (4) der Beschreibungsdatei der Signalisierungsquelle (SS),
- Mittel zum Erfassen (6) eines gesendeten Signalisierungskanals (SC) an der Signalisierungsquelle (SS) ausgehend von der Beschreibungsdatei der Signalisierungsquelle (SS) und
- Mittel zum Empfangen (7) mindestens eines digitalen Datenstroms, der das audiovisuelle Programm (PG) unterstützt, ausgehend von dem gesendeten Signalisierungskanal (SC).
